# EUROPEAN PATENT SPECIFICATION

(11) **EP 4 246 410 B1**
(45) Date of publication and mention of the grant of the patent: **13.08.2025**
(21) Application number: 23162082.4
(22) Date of filing: 15.03.2023
(51) Int. Cl.: G06Q 30/0601, G06Q 50/06

(54) **DIGITAL HOME CONTROL AND RECOMMENDATIONS**
DIGITALE HEIMSTEUERUNG UND EMPFEHLUNGEN
COMMANDE ET RECOMMANDATIONS DE MAISON NUMÉRIQUE

(30) Priority: 17.03.2022 US 202263320713 P
(43) Date of publication of application: 20.09.2023
(73) Proprietor: The Procter & Gamble Company, Cincinnati, OH 45202 (US)
(72) Inventor: CLARKE, Colin John, Berkshire, Reading, RG2 0QE (GB); TANG, Kejia, Cincinnati, 45202 (US); PRAKSTI, Michael Edward, Cincinnati, 45202 (US)
(74) Representative: P&G Patent Germany

(56) References cited:
- US-A1- 2012 053 740
- US-A1- 2018 074 468

## Description

### FIELD OF THE INVENTION

The present invention relates to digital control of a domicile for purposes of conserving energy, water usage, and finances.

### BACKGROUND OF THE INVENTION

Residential homes are becoming more digitally 'driven'. Automation has and can be used to regulate and modify certain consumer habits and routines. Consumers are conscience not only of the cost of the energy, water and products they use, but the implication such use (and often over-use) has on the environment. Further, from automatic control of home appliances to time of use tariffs for water and energy, residential homes will undergo significant changes within the next decades. As the decarbonization of energy gathers pace, further changes within our homes will be necessary.

Additionally, the external need to balance energy grids with local demand, will result in energy costs varying within a 24 hour day based on the local supply and demand. Indeed, even now early adopters are switching to time of use tariffs that vary the cost every 30 minutes throughout the day. Choosing when to perform consumptive tasks in the home such as laundry, showering, cooking, or charging electric vehicles will become extremely complicated for consumers to manage manually against this variable cost model. Tracking consumption and costs in the home will thus need automated, digital solutions to assist consumers in the scheduling and operation of consumptive tasks in the home.

In addition to the problem of energy and water management, the procurement of FMCG products is increasing shifting away from the consumer traditions of retail stores to more 'direct to consumer' routes via internet-based suppliers. In many cases this is due to convenience, but it can also be a lower cost and more sustainable methods of procurement for the home. Managing the inventory of products needed for the home can also be a challenge with today's busy lifestyles. Running out of a needed product via an internet supplier can lead to a delay in awaiting the delivery of such items.

Consumers are also adopting more 'smart based solutions' such as smart speakers, or digital assistants. These devices allow the consumer to pose various questions when the consumer is specifically looking for answers and solutions to problems that are experiencing. Consumers find that such system are less effort that the conventional typing into a question or request into a search engine and self-screening results whilst looking for an answer. Likewise, many 'monitoring solutions' exist within the art however they are generally single end point focused, e.g. on energy or water management. US2012053740A1 discloses an Energy Smart System allowing to generate an energy profile and a carbon footprint of an individual's home along with recommendations for energy savings and/or possible addition of on site generation or energy storage.

Thus, there remains the need for systems, methods of coordination, and digital controllers that pull together available tools and adapts them to the changing energy supply and demand issues, as well as assisting consumers with lowering their use of energy and water to achieve necessary environmental benefits. Consumers are increasingly becoming aware of need to address climate change via more environmentally friendly consumption habits, but are not entirely sure how to achieve these better consumption habits. Moreover, consumers need assistance with simple household management issues such as maintaining a necessary level of household products. Only fragmented systems and devices are available to consumers. Thus, the need exists for holistic monitoring, metering and measuring, of consumer habits within a home and assisting the consumers to modify their habits and practices to reduce consumption of energy and water, use both at the optimal time, and to maintain appropriate inventory of the household products they use.

### SUMMARY OF THE INVENTION

The present invention provides a solution for one or more of the deficiencies of the prior art as well as other benefits. The invention is defined in the appended independent claims. Dependent claims constitute embodiments of the invention. In the present description and drawings, any examples and technical descriptions of apparatuses, products and/or methods which are not covered by the claims should be taken as background art or examples useful for understanding the invention.

In either embodiment of the present invention the input data source may be a Smart Water or Smart Energy Advanced Metering Infrastructure meter located within or adjacent the domicile. Likewise, the input data source can be a digitally enabled device or appliance selected from the group consisting of a washing machine, a refrigerator, a microwave oven, a stove, an oven, a toothbrush, or a razor. Further, the input data source can be one or more sensors, a digital hub connected to one or more sensors, or an application program interface connected to one or more sensors, or the input data source can be data manually entered by an inhabitant. Additionally, in addition to the at least one input data source, external data may also be collected.

In another embodiment of the present invention, the product usage parameters within the domicile are calculated by data entered manually by an inhabitant relating to the amount of product used, and a notice may be sent to an inhabitant when an individual product has reached a level that requires that additional amount of that product must be ordered to ensure the new product arrives before the existing product is depleted. In another embodiment of this invention the notice sent to the inhabitant includes a recommendation to order a proprietary product.

The present invention provides many benefits over the prior art. Specifically, looking holistically at a discreet domicile and the inhabitants of that domicile to track and record their consumption habits, practices, timing and amounts. This present invention goes further to take this holistic data collection schema to provide timely recommendations to the inhabitants of the domicile the can lower their energy and water consumption in addition to recommending better timing for their consumption events based on the billing practices of local utility companies.

### BRIEF DESCRIPTION OF THE DRAWINGS

Fig. 1 is a diagram of a domicile according to the present invention, its inhabitants, and how their consumption events are monitored, tracked, recorded and how recommendations are made based on the data collected.
Fig. 2 is a schematic view of a domicile control system and how various devices are monitored, tracked and how the resulting data flows between elements of the present invention.
Fig. 3 is a graphical representation of data collected from a water meter and how that data can be correlated to consumption events.

### DETAILED DESCRIPTION OF THE INVENTION

The present invention is flexible in that it has the ability to fit within present and future home eco-systems without significant effort, and to be able to adapt to new control, monitoring and metering elements. By using a range of external, internal, device driven and inhabitant specified data sources, the system is far more flexible than today's solutions which specifically rely on a single device or data source, e.g. smart meters or a smart washing machine. Moreover, in this invention, the domicile inhabitants remain in control of how the system is used, and they can adapt the use for their own personalized needs. They may, for example, just use the inventory management and monitoring engine. Or they may use a behavioral inhabitant-based engine to determine specific inhabitant trends or costs. The preset systems can allow new data streams, devices, sensors and inhabitants to be added and removed without loss of functionality or needing replacement. It can also act as a platform level system, allowing future devices and services to be hosted upon it.

The advantage of this system is that it can manage multiple streams for a variety of flexible endpoints, including footprint cost and product deliveries 'in-time'. By use of such a system, the efficiency of utilities and products are optimized as specified by the inhabitant, which results is less greenhouse gas (GHG) emissions, cost and outages of products within the home.

Further, the present systems allow a greater choice of privacy options for the end user as a function of the algorithms can be controlled via hardware (locally) or via cloud-based operation. The consumer retains ultimate choice about the types of consumption event that are calculated, or whether any behavioral tracking is used.

### Definitions

The following list of words, phrases and initialism may be known to those to skilled in the art. But in a effort to provide consistency and clarity, the following definitions will apply to the present specification.

"50 Litre Devices" or "50 L Devices" as used herein means
"Advanced Metering Infrastructure" or "AMI", as used herein means modern two-way communication systems owned by utilities and usually installed by gas/electric/water companies in residential areas.

"Application Program Interface" or "API", as used herein means a system for sending and retrieving data over the internet.

"Behavioural Profiling Engine" or "BPE", as used herein means a system for the tracking of usage patterns of individual domicile inhabitant and agglomerating that into the usage patterns of all the inhabitants within a domicile, to generate predictive and observational insights.

"Communications Hub", as used herein means a device responsible for facilitating communications between other devices on the HAN.

"Computer Implemented", as used herein means data and instructions processed and executed on digital devices capable of computation.

"Consumer Access Device" or "CAD", as used herein means a device capable of interacting with a HAN.

"Consumption Event", as used herein means the use of energy, water, a product or combinations thereof by an inhabitant of a domicile. Further, consumption events define parameters. It is understood that consumption events are often combinations of usage. For example, a common shower uses water, of course, but the water is typically heated with energy, and soaps, shampoos, and conditioners are also used. Laundry washing is a similar example but adds the complication of multiple water temperatures.

"Digital Assistant" sometimes referred to as a "Smart Speaker" as used herein means the commercially available devices that can receive spoken comments, questions, or directions, and provide an appropriate response. For example, a digital assistant can answer simple questions like the time and date, play a favorite song, turn on the lights in the family room, and provide the current odds of the Cincinnati Bengals^{®} winning the Super Bowl. The most commonly used digital assistants are Google's^{®} Echo^{®}, Amazon's^{®} Alexa^{®}, and Apple's^{®} Siri^{®}.

"Digital Hub", as used herein means digital connection point and repository for telemetry and data received from sensors

"Digitally Enabled", as used herein means a device connected via some communications protocol to other devices or the internet

"Domicile" as used herein is a home, apartment, condominium, dwelling, or the like where one or more humans reside. The word "home" is used herein as interchangeable with domicile.

"External Data", as used herein can mean any of a variety of external data that might impact an inhabitant's use of water, energy, or products. Weather data is an obvious external data source, as external temperature is one of the primary driving forces behind energy consumption within a domicile. Time of year, number of hours of daylight, daylight savings time, children's sporting seasons, and the like, are all data sources that can explain, predict and help to optimize the use of water, energy, and products within a domicile.

"Home Area Network" or "HAN", as used herein means a computerized network in a domicile, which can communicate electronically with modern appliances and broadcasts data from the AMI Communications Hub.

"Human Activity" or "HA", as used herein means an activity such as showering, brushing teeth, washing hands, or the like.

"Identifying", as used herein means the determination of a particular attribute, individual, or consumptive event occurring within a domicile.

"Inhabitants" as used herein means the humans who live within a particular domicile and consider that domicile their primary domicile. "Consumer" and inhabitant are used interchangeably herein because the inhabitants are in control of the consumption of energy, water and products within the domicile and are thus, the consumers.

"Intervention", as used herein means communication signalling a deviation from expected or desired behaviour, and the providing of a set of items or actions to help.

"Inventory Management Engine" or "IME", as used herein means a system for tracking and replenishing products.

"Parameter", as used herein means a numerical or other measurable factor forming one of a set that defines a system or sets the conditions of its operation.

"Product", as used herein means consumer product, device or service
"Sponsored Product" as used herein describes a product owned by one corporation or business entity.

"Razor", as used herein means a device for hair removal
"Recommendation Engine" or "RE", as used herein means a system for generating a set of items, actions or both, with a focus on choosing ecologically and economically friendly options.

"Usage", as used herein means the action of using something or the fact of being used.

"Water", as used herein means a colorless, transparent, odorless liquid that forms the seas, lakes, rivers, and rain and is the basis of the fluids of living organisms.

Common initialism used in the present specification, whose meaning are either selfexplanatory or are notoriously well known to those skilled in the art, include: "ML", Machine Learning; "JTBD", Job to be Done; "FMCG", Fast Moving Consumer Goods; "ADW", Automatic Dish Washer; "AWM", Automatic Washing Machine; "ESS", Energy and/or Power Source; "POU", Point of Use; "BLE", Bluetooth Low Energy; and "GHG", Green House Gas.

### System Overview

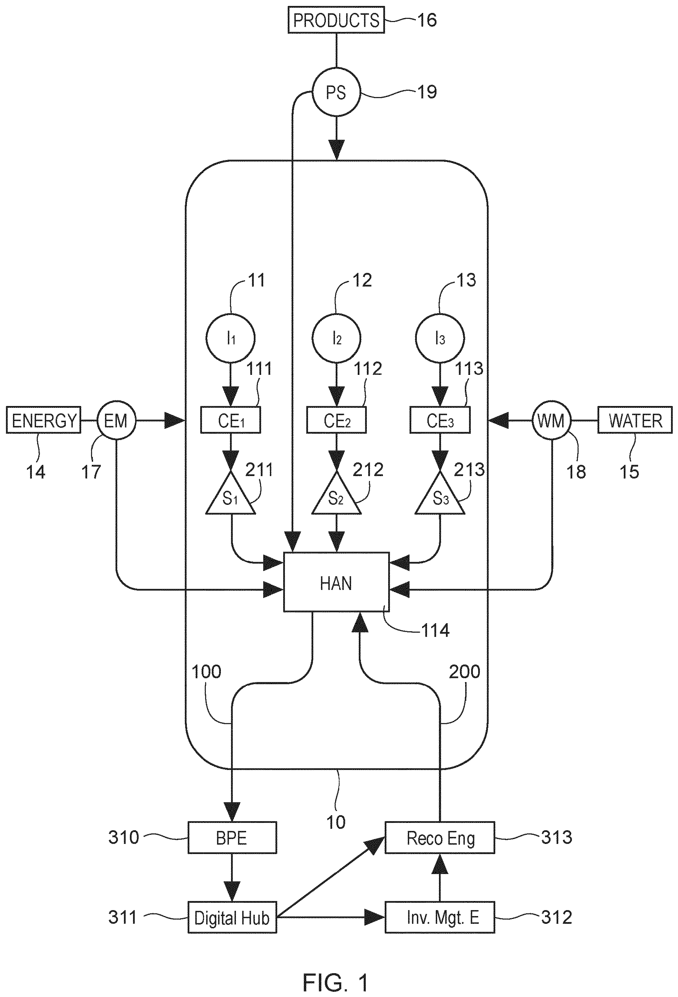

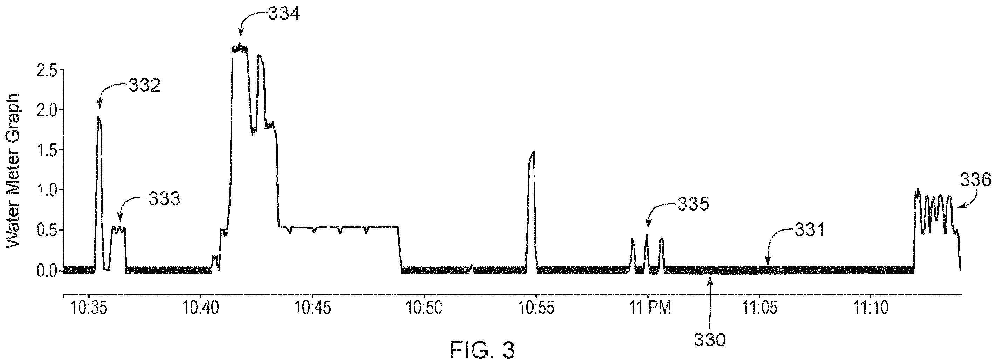

The present systems can best be visualized with a few illustrations viewed in conjunction with the definitions above. Specifically, Fig. 1 shows domicile 10 containing inhabitant 11, inhabitant 12, and inhabitant 13. Input sources to domicile 10 include energy 14, as measured by energy sensor 17, water 15 as measured by water meter 18, and products 16 as measured by product sensor 19. Water meter 18 is discussed in greater detail in Fig. 3. Consumption event 111 by inhabitant 11 and monitored by sensor 211; consumption event 112 by inhabitant 12 and monitored by sensor 212; and consumption event 113 by inhabitant 13 and monitored by sensor 213 are also shown. All sensors (211-213) feed data into the Home Area Network, HAN 114, which sends the collective data 100 to the Behavioural Profiling Engine, BPE 310. BPE 310 may be a part of or in digital communication with digital hub 311 which outputs data to the inventory management engine 312 and the recommendation engine 313 which collectively provide recommendations 200 back to the HAN 114. All inhabitants (11-13) will have access to HAN 114 and the recommendations 200 contained therein. Additional "engines" are discussed below and can be added to this system based on the inhabitant needs and desires. The sensors (211-213) can be any described herein, exemplified directly succeeding this section, or known to this skilled in the art.

Further, sensor data may be from a combination of sensors. For example, an inhabitant might pick up an object in the bathroom and move that object towards their face. This motion and the device might be easily sensed by a camera. For obvious reasons, a Lidar laser sensor might be preferred in a bathroom context due to privacy concerns. But the Lidar sensor might not be able to tell if the inhabitant picked up a connected toothbrush or a connected razor. But the connected toothbrush or razor can send their own signal to the HAN indicating that it is being used. Thus, the HAN can combine the data from two sensors to determine that a toothbrush is being used and toothpaste is being consumed.

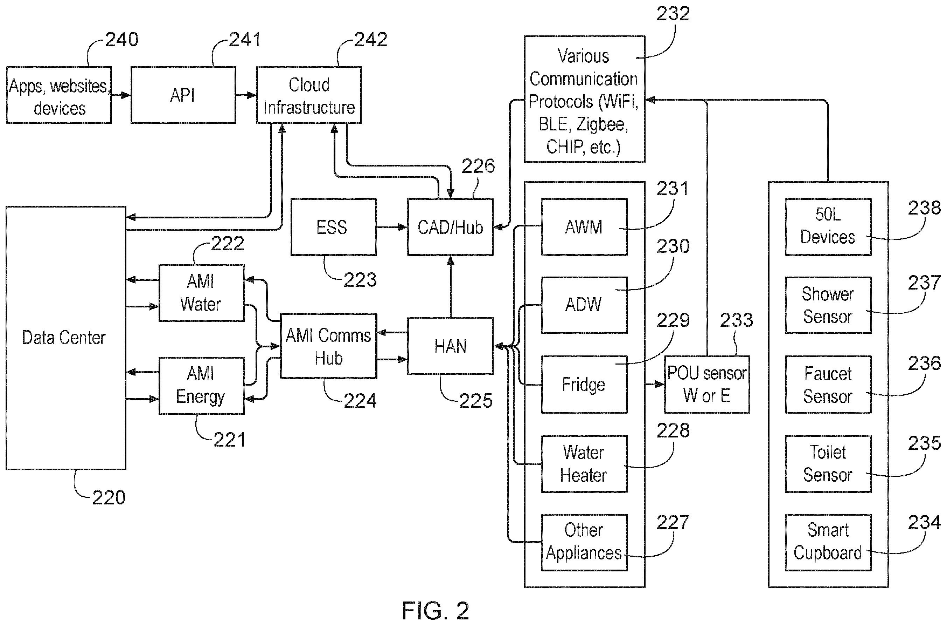

Turning now to Fig. 2 which is schematic representation of another embodiment of this invention. Data centre 220 receives input from and sends data to a variety of sources: AMI energy 221, AMI water 222, and cloud infrastructure 242. Likewise cloud infrastructure 242 sends and receives data to and from CAD/Hub 226, and receives data from app websites, devices and the like 240 via API 241. CAD/Hub further receives data from HAN 225, ESS 223 as well as Various communication protocols (e.g. WIFI, BLE, Zigbee, CHIP and the like) 232. HAN 225 is further in two way communication with AMI Comms Hub 224 which itself is in two communication with AMI water 222 and AMI Energy 221. HAN 225 receives additional input from a variety of connected devices, for example, AWM 231, ADW 230, Refrigerator 229 Water Heater 228, and other appliances 227, these devices in turn sends point of use data to POU sensor 233, which sends that data to the various communication protocols 232. Likewise additional connected devices, for example, 50 L Devices 238, shower sensor 237, faucet sensor 236, toilet sensor 235 and smart cupboard 234 can all send data to the various communication protocols 232.

No domicile is shown in Fig.2 because the relative position of the elements shown in Fig. 2 may be inside or outside the domicile. Toilet sensor 235, ADW 230 and HAN 225 are almost certainly inside the domicile, while cloud infrastructure 242 and apps websites and devices 240 are almost certainly outside the domicile. Data centre 220 AMI water 222, and AMI Comms Hub can be inside or outside the domicile. The propose of Fig. 2. Is largely to show the flow of information as consumption events occur in, for example, shower sensor 237 or AWM 231, and how they are recorded, and transmitted to other elements of the systems of the present invention. Moreover, Fig. 2 shows the flexibility with which any connected device can fit into this system and how it interacts and communicates with the other elements of the system. Those skilled in the art will appreciate the myriad of design choices available for the systems of the present invention.

Turning now to Fig. 3 which is a graphical representation of a typical home water meter showing water usage line 330 as a function of time. The base line 331, shows no water flowing into the home. The various peaks along usage line 330 show water consumption events. Peak 332 is a flushing toilet and peak 333 is an inhabitant taking a shower. These peaks can be determined by the simple process of going into the domicile when no water is running and flushing the toilet and monitoring the graph to see what that consumption events looks like. Additionally, those skilled in the art will appreciate that peak 334 is a washing machine running and peak 335 is an automatic dish washer. The height of the peaks is the amount of water used (typically more for a washing machine than for a dishwasher) the width of each peak is the amount of time the water is being use (the time of each cycle) and the spaces between peaks is the amount of time the clothes or dishes are being washed in the water previously added to the machine. By this method, essentially all water consumption events can be identified.

Water consumption events, can, of course be cumulative 336. Inhabitants may flush a toilet while someone is in the shower, or clothes ae being washed. However, once AMI is trained to identify one event, it can also be trained to identify two distinct events occurring at the same time. This analysis becomes a little more difficult for consumption events that are not discreet, measurable events. Washing ones hands, brushing teeth, or hand washing a few dishes in the sink do not always present the same consumption profile. But as discussed above, multiple sensors can be used to define a consumption event. A Lidar sensor in the bathroom might determine that an inhabitant is picking up an object in the bathroom and moving toward their face. A connected toothbrush might send a signal that is being used in the same bathroom, and an unidentified water consumption event begins. It is logical to deduce, based on the input of three sensors, that the unidentified water consumption event is an inhabitant brushing their teeth.

One further level of domicile data is the recordation and classification of inhabitant habits and practices. Sensors are able to distinguish, based on a number of physical characteristics (facial recognition being one of the most accurate), different inhabitants with a domicile. Once distinguished, the consumption events can be associated with each individual inhabitant. Even non-consumption events, for example, when each inhabitant goes to beds and gets up in the morning, can be monitored and recorded. This may not seem like useful information at first glance, but what if inhabitant 1 goes to bed early every night, and energy prices go down after that inhabitant is in bed. And inhabitant 2 stays up later most nights. If inhabitant 1 does the laundry for all of the inhabitants in the domicile, one recommendation might be for inhabitant 2 to take over that chore and do the laundry later at night when energy prices are lower. Thus, inhabitant habits and practice, whether associated with a consumption event or not, can be useful data in optimizing energy, water and product consumption.

### Exemplary Sensors and Monitoring Devices

Exemplary monitor, meters, sensors and other smart/connected devices suitable for use in the present invention include, but are not limited to (many others will be known to those skilled in the art):
Power sensors connected to power sources and home energy usage: Sense Home Energy;
https://sense.com/?_sm_byp=iVVVQZ5M16F7kvqH
Home Energy Systems (HEMS): Energy Star HEMS;
https://www.energystar.gov/products/smart_home_energy_management_systems?_sm_byp= iVVVQZ5M16F7kvqH
Smart energy meters: Model No E470 - AMI Smart energy meter, Model No G470 - Ami Smart Gas Meter; AMI Energy - Landis and Gyr, 30000 Mill Creek Ave., Suite 100, Alpharetta, GA 30022.
Smart water meters: Multical 21; AMI smart water meter Kamstrup A/S, Industrivej 28, Stilling, 8660 Skanderborg, Denmark.
Inline flow/temperate/(conductivity - IFM only) meters: sm6000 (flow, T) and LDL100 (Conductivity); IFM/Droople, Ifm efector, inc., 1100 Atwater Dr., Malvern, PA 19355
CAD: Chameleon, Chameleon Technology, Gardner House, Hornbeam Park Avenue, Harrogate HG2 8NA UK.
Water quality sensors: EXO2 Multiparameter Sonde; Xylem/YSI, YSI Incorporated, 1700/1725 Brannum Lane, Yellow Springs, Ohio 45387-1107 USA.
Weight sensors: AP8 low profile force sensor (1kg); Flintec Inc., 18 Kane Industrial Drive, Hudson, MA 01749.
Smart refrigerator: The Samsung Family Hub Refrigerator; Samsung, 85 Challenger Rd #6th, Ridgefield Park, NJ 07660.
Smart appliances: Whirlpool Smart washing machine Model WTW6120HW; Smart Dishwasher WDT975SAHZ; commercially available at most appliance stores and online.
Smart personal care devices: ORAL B- Smart 5000 Toothbrush, Bic Smart razor (https://nextbicthing.com/).
Imaging devices: Digital Phones, Go-pro cameras;
https://gopro.com/en/us/ Lidar (Laser range finders and 3-D imaging): LI-USB30-TOF-GMSL2-6M; from https://www.leopardimaging.com/tof-cameras/,
Machine Vision: blackfly usb; from https://www.flir.com/browse/industrial/machine-vision-cameras/

### Near Field Communication aids:

- NFC Sticker PVC On Metal with hole, 30 mm, NTAG 213, 180 byte, white
- NFC Sticker, 30 mm, NTAG 215, 480 byte, 10 pcs. white
- NFC Starter Kit Maxi
- NFC Sticker Circus, 22 mm, NTAG 213, 180 byte, white
- PVC NFC Card, 85 mm x 54 mm, NTAG 213, 180 byte, white
- NFC Keyfob, 40 x 32 mm, NTAG 213, 180 byte, blue
- Silicone NFC Wristband, NTAG 216, 924 byte, black

### System Details

The present invention provides a digital 'management engine' for the home, or domicile. One that encompasses measurement and tracking of consumptive events for the domicile, either on a whole home or on a cost basis. This applies for a specific JTBD and for tracking the consumption events over time, to profile consumptive behaviors. The 'engines and mathematical algorithms can work in a number of embodiments. For example, one embodiment is for a cloud-based system, requiring no specific hardware to be installed within the home, as AMI, smart appliances and sensors can use the respective AMI and Wi-fi networks to upload data to a centralized source (e.g., the cloud) for computation and management. Alternatively, another embodiment could be realized as a small hardware 'hub' located within the domicile, connecting AMI, smart devices, sensors and other data for edge-based calculation on the hardware hub itself. In both embodiments some form of consumer interface via PC, device or API is envisaged to allow inhabitant interaction and choice.

In addition to managing consumption, the present systems can also manage the FMCG inventory for the home, ensuring products do not run out and sufficient stock is always maintained. Via tracking of the consumptive events, such a system could predict the consumption rates of products (e.g., laundry detergent), via tracking the number of wash cycles and ensuring an order is placed in good time to allow procurement and delivery. Finally, consumers could also consult such a system to provide solutions related to home management in the same way that digital assistants provide a general based solution option today. For example, if they wish to know the best way to clean an item or wish to understand how to reduce the energy consumption of a particular task, such solutions could be provided by the systems of the present invention.

The present invention is a digital, or digital-physical hybrid engine that allows for the identification and tracking of consumptive events within a domicile, as well as providing as needed solutions for inhabitants related to product usage. Consumptive events include those which consume energy, water, products or any combination of these. Consumptive events can be determined from sensors external to the domicile data sources and sensors or measured directly either via sensors or smart appliances. Some examples of external sources would include, smart meter water and energy data, via an external data cloud/source or via the use of a CAD device and/or other external API's. As a Consumption event is identified, the impact of this event in terms of cost, footprint, time can be calculated and identified as parameter associated with that consumptive event.

Further, by connection to future utility smart grids, which facilitate dynamic pricing and using external data sources, the system can predictively determine the cost of a future consumption event allowing the inhabitant to better manage their available financial resources over a set time period. This can be achieved on an individual consumption level, e.g., the washing machine or via a budget managing approach. For example, the inhabitant may wish to know "When it is cheapest to run my dishwasher?", or "Tell me when I have spent 30 dollars on dishwashing in any given time period.". In terms of cost and resource management, this is a significant improvement over current solutions which are limited typically by the input data sources and limited to one specific utility, such as energy. Further, the hybrid data approach allows affiliate brands and devices the opportunity to connect into the system via direct sensor or other data means. For example, a smart toothbrush can connect the system to monitor water and product use at the bathroom faucet. A smart cupboard or smart fridge, which independently monitors consumption, can connect to use the inventory management elements of the system. Thus, the systems disclosed herein have the potential to be ultra-personalized based on the products, service and devices the specific inhabitant wishes to use, and can 'evolve' over time allowing new devices and systems to utilize the architecture.

In addition, via whole domicile or inhabitant behavioral tracking the invention can provide unique insight into consumption trends and provide timely information to the inhabitants to allow more efficient management of the domicile. The inhabitants can interact with the system to set certain intervention points or notification triggers, for example when the amount of water and energy goes above a pre-set budget, or if a particular product, e.g., laundry detergent, will expire and requires reordering. This architecture is known as the "intervention engine" and can be partially or wholly set by the inhabitant.

Further, a "recommendation engine" can present recommended choices to the inhabitant for optimization dependent on their personalized requirements. It is further envisioned that the recommendation engine could facilitate an "incentivization engine" to gamify or reward the consumer for certain behavioral changes which result in a lower or more optimized pattern of consumption. This could be achieved at a personal level within the system, or by means of an external branded tie-in from affiliates. For example, efficient showering, as determined by monitoring the water, energy and product used per shower and comparing that with certain behavioral and consumption metrics, can result in product or credits being rewarded to the inhabitant.

One further element of this invention is the ability to accurately manage the inventory of common household products for the inhabitant, using the consumptive modelling as a real-time indicator as to the current stock level of a particular item. Thus, this invention also incorporates an "inventory engine", wherein the inhabitant specifies an inventory list of all the products used/preferred by the household with an appropriate stock level and warning/re-order levels. The system will track the consumption of a particular product and warn the inhabitant of a predicted stock outage. The inventory engine also links to external sourcing applications and has a provision for its own internal sourcing application. Thus, at the end of a particular inhabitant specified time period, a shopping list can be presented to the inhabitant to allow them to re-order digitally, to ensure that products do not run-out in the domicile when they are needed. The inhabitant retains ultimate purchase authority but is presented with several potential product and cost alternatives along with any offers from franchised provision sources.

Corporations, or "sponsor companies", can be asked to participate in this inventory control system where their products might get priority recommendations in exchange for favorable pricing to the inhabitants. The aim here is to maximize the sponsor company's provisioning of the future smart domicile product needs with efficient branded solutions to the consumer just-in-time and freeing the consumer of the need to physically purchase and track consumption. Of course, a sponsor company may not produce all of the products used in a domicile, and there are likely instance where a competitive product is preferred by the inhabitant. In this instance, providing only one solution may not be conducive to the inhabitant.

An "auction engine" that takes the form of an online marketplace auction to allow other companies, or "affiliates" that are not associated with the sponsor company, to provide products to the domicile inhabitant outside of the sponsor company's broad offerings. In this engine, the need for a particular product is hosted on an anonymized marketplace, based on conditions set by the inhabitant, for example, best price, fastest delivery, availability. Affiliates to the system, who can provision such products will be allowed to bid for that specific product delivery within an auction entity. The sponsor company would take an affiliate charge from affiliates for each auction bid to realize a revenue source for the provision of products outside the sponsor company offerings, or for a direct competitive alternative.

### Examples

Below are examples of recommendations based on monitored parameters as claimed herein.

An example recommendation might come when a user who has defined a certain "Carbon Budget" on a month-to-month basis, which is calculated using consumption event parameters. The consumer may be alerted towards the end of the month that they are nearing their limit. The consumer can be provided with a list of recommendations generated based off of their behavioural patterns on how to reduce their footprint until their budget resets.

Further, a recommendation might be based on product usage with the goal of auto replenishment. Consumption event parameters and product usage pattern analysis is used to predict that a consumer will run out of dish soap in the following week. The consumer is prompted with a push notification asking if they would like to have their refill sent.

Recommendations can be based on third party data. An example might be using consumption event parameters paired with weather parameters for the consumer's locale it can be determined that the consumer is cooling/heating their house inefficiently. They can be prompted to open opposing windows during a certain part of the day, then turn the thermostat down from their typical setting by 2° F.

Another recommendation may be for the operation of appliances for least cost. A consumer sets the desired outcome of operation of key water and energy appliances for least cost. In this example, the size of each consumption event is realised from historical usage and this is compared against a predicted 'time of use' energy available from the grid. The system then recommends the optimum time for operation and via the AMI HAN schedules the operation of each appliance, e.g., washing machine or dishwasher. The consumer retains control and can override the recommendation if an operation is needed faster than the low-cost scheduling. The user can look at the cost and operation delivered as well as compare this to previous historical data.

Yet another recommendation can be based on consumer behavioural monitoring. In this example the system identifies and tracks individual consumers within a domicile of their individual consumption profiles. The consumer, homeowner (or landlord) can use these insights to understand how the cost or footprint of their consumption compares to the domicile as a whole. Such a tracking system could be used to determine the cost due from each resident in the case of a landlord multidwelling home, or to identify areas of waste. Recommendations for reducing consumption footprints can additionally be provided.

Product impact tracking can be a source of another recommendation. The system can report on the consumption levels associated with a certain product as it is used. For example, the consumer can track the efficiency of a particular laundry product, and compare it to the efficiency of another product to determine any value or savings from the use of a switched product. For example, comparison of laundry detergents, dish detergents or a shower product.

Example parameters that might be collected include, but are not limited to, is the time during peak hours or nonpeak hours. Parameters can be taken from individual appliances, for example, the dishwasher: cycle type; load type; temperature; drying time; washing time; detergent metric; and rinse metric. Likewise the refrigerator: temperature (fridge); temperature (freezer); fill level; and operation continuity metric. The washing machine: cycle type; load type; spin cycle; temperature; garment type; soil metric; fabric enhancer metric; perfume metric; detergent metric; and monitoring level. The shower: length of time; water temperature; flow pressure; energy cost; and water cost.

Parameters can be obtained from consumer specified devices: toothbrush (electric or manual); coffee maker; oven; pool heater; water pump; hot tub; and small electric vehicles (EVs). Consumption events: length of event; start time; end time; class of event; energy volume; water volume; variable cost; fixed cost; total cost; carbon; water temperature; type of event; automatic; user initiated; domicile level event; individual level event; relevance rating; domicile location; and Geo location.

Automated inventory stocking is another source of parameters: product ID; product name; product fill level; UPC; predicted stock level; actual stock level; consumer defined stock level; usage rate; and refill cadence. Further recommendations can from the consumer: consumer defined thresholds; automatic thresholds; anomaly description; anomaly location; anomaly consumer; and is the recommendation accepted or rejected.

All percentages are weight percentages based on the weight of the composition, unless otherwise specified. All ratios are weight ratios, unless specifically stated otherwise. All numeric ranges are inclusive of narrower ranges; delineated upper and lower range limits are interchangeable to create further ranges not explicitly delineated. The number of significant digits conveys neither limitation on the indicated amounts nor on the accuracy of the measurements. All measurements are understood to be made at about 25°C and at ambient conditions, where "ambient conditions" means conditions under about one atmosphere pressure and at about 50% relative humidity.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A computer implemented method for determining inhabitant habits associated with at least one consumption event within a domicile (10), the method comprising the steps of:
generating data by at least two input data sources (14-16) within the domicile (10);
identifying an inhabitant (11-13) within the domicile (10);
combining the data from the at least two input data sources (14-16) to identify at least one consumption event (111-113) as a combination of at least two usages selected from the group consisting of water usage, energy usage, and product usage;
associating said identified consumption event (111-113) with the inhabitant (11-13);
processing the data with the computer to calculate parameters of cost, footprint and time associated with the at least one consumption event (111-113);
determining the inhabitant's habits based on the calculated parameters;
providing communication signalling a deviation of said inhabitant's habits from expected or desired behaviour.

2. The method according to claim 1, wherein the input data source is a Smart Water (18; 222) or Smart Energy (17; 221) Advanced Metering Infrastructure meter located within or adjacent the domicile (10).

3. The method according to claim 1 or 2, wherein the input data source is a digitally enabled device or appliance.

4. The method according to claim 3, wherein the digitally enabled device or appliance is selected from the group consisting of a washing machine, a refrigerator (229), a microwave oven, a stove, an oven, a toothbrush, or a razor.

5. The method according to any of the preceding claims, wherein the input data source is one or more sensors, a digital hub (226) connected to one or more sensors (235-237), or an application program interface (241) connected to one or more sensors (235-237).

6. The method according to any of the preceding claims, wherein the input data source is data manually entered by an inhabitant.

7. The method according to any of the preceding claims, wherein product usage parameters within the domicile are calculated by data entered manually by an inhabitant relating to the amount of product used.

8. The method according to any of the preceding claims, where in addition to the at least one input data source, external data is also collected.

9. The method according to any of the preceding claims, wherein said inhabitant associated to said identified consumption event is distinguished based on physical characteristics collected by a sensor.

## Patentansprüche

1. Computerimplementiertes Verfahren zum Bestimmen von Bewohnergewohnheiten, die wenigstens einem Verbrauchsereignis innerhalb eines Domizils (10) zugeordnet sind, wobei das Verfahren die folgenden Schritte umfasst:
Erzeugen von Daten durch wenigstens zwei Eingangsdatenquellen (14-16) innerhalb des Domizils (10);
Identifizieren eines Bewohners (11-13) innerhalb des Domizils (10);
Kombinieren der Daten aus den wenigstens zwei Eingangsdatenquellen (14-16), um wenigstens ein Verbrauchsereignis (111-113) als eine Kombination aus wenigstens zwei Verwendungen zu identifizieren, die aus der Gruppe ausgewählt sind bestehend aus Wasserverbrauch, Energieverbrauch und Produktverwendung;
Zuordnen des identifizierten Verbrauchsereignisses (111-113) zu dem Bewohner (11-13);
Verarbeiten der Daten mit dem Computer, um Kosten-, Platzbedarfs- und Zeitparameter zu berechnen, die dem wenigstens einen Verbrauchsereignis (111-113) zugeordnet sind;
Bestimmen der Gewohnheiten des Bewohners auf Grundlage der berechneten Parameter;
Bereitstellen einer Kommunikation, die eine Abweichung der Gewohnheiten des Bewohners vom erwarteten oder gewünschten Verhalten signalisiert.

2. Verfahren nach Anspruch 1, wobei die Eingangsdatenquelle ein Smart Water (18; 222) oder Smart Energy (17; 221) Advanced Metering Infrastructure-Zähler ist, der sich innerhalb oder neben dem Domizil (10) befindet.

3. Verfahren nach Anspruch 1 oder 2, wobei die Eingangsdatenquelle eine digital aktivierte Vorrichtung oder Einrichtung ist.

4. Verfahren nach Anspruch 3, wobei die digital aktivierte Vorrichtung oder Einrichtung aus der Gruppe ausgewählt ist bestehend aus einer Waschmaschine, einem Kühlschrank (229), einem Mikrowellenherd, einem Herd, einem Ofen, einer Zahnbürste oder einem Rasierer.

5. Verfahren nach einem der vorstehenden Ansprüche, wobei die Eingangsdatenquelle ein oder mehrere Sensoren, ein mit einem oder mehreren Sensoren (235-237) verbundener digitaler Hub (226) oder eine mit einem oder mehreren Sensoren (235-237) verbundene Anwendungsprogrammschnittstelle (241) ist.

6. Verfahren nach einem der vorstehenden Ansprüche, wobei die Eingangsdatenquelle Daten sind, die manuell von einem Bewohner eingegeben werden.

7. Verfahren nach einem der vorstehenden Ansprüche, wobei die Produktnutzungsparameter innerhalb des Domizils anhand von Daten berechnet werden, die von einem Bewohner manuell eingegeben werden und sich auf die Menge des verwendeten Produkts beziehen.

8. Verfahren nach einem der vorstehenden Ansprüche, wobei zusätzlich zu der wenigstens einen Eingangsdatenquelle auch externe Daten erfasst werden.

9. Verfahren nach einem der vorstehenden Ansprüche, wobei der dem identifizierten Verbrauchsereignis zugeordnete Bewohner auf der Grundlage von durch einen Sensor erfassten physischen Merkmalen unterschieden wird.

## Revendications

1. Procédé implémenté par ordinateur permettant de déterminer des habitudes d'habitant associées à au moins un événement de consommation au sein d'un domicile (10), le procédé comprenant les étapes consistant à :
générer des données par au moins deux sources de données d'entrée (14-16) au sein du domicile (10) ;
identifier un habitant (11-13) au sein du domicile (10) ;
combiner les données provenant des au moins deux sources de données d'entrée (14-16) pour identifier au moins un événement de consommation (111-113) en tant que combinaison d'au moins deux utilisations choisies dans le groupe constitué par utilisation d'eau, utilisation d'énergie et utilisation de produit ;
associer ledit événement de consommation (111-113) identifié à l'habitant (11-13) ;
traiter les données avec l'ordinateur pour calculer des paramètres de coût, d'empreinte et de temps associés à l'au moins un événement de consommation (111-113) ;
déterminer les habitudes de l'habitant en fonction des paramètres calculés ;
fournir une communication signalant une déviation desdites habitudes de l'habitant par rapport à un comportement attendu ou souhaité.

2. Procédé selon la revendication 1, dans lequel la source de données d'entrée est un compteur d'infrastructure de comptage avancée de type compteur d'eau intelligent (18 ; 222) ou compteur d'énergie intelligent (17 ; 221) localisé au sein du, ou adjacent au, domicile (10).

3. Procédé selon la revendication 1 ou 2, dans lequel la source de données d'entrée est un dispositif ou appareil utilisant une technologie numérique.

4. Procédé selon la revendication 3, dans lequel le dispositif ou appareil utilisant une technologie numérique est choisi dans le groupe constitué par un lave-linge, un réfrigérateur (229), un four à micro-ondes, une cuisinière, un four, une brosse à dents, ou un rasoir.

5. Procédé selon l'une quelconque des revendications précédentes, dans lequel la source de données d'entrée est un ou plusieurs capteurs, un hub numérique (226) connecté à un ou plusieurs capteurs (235-237), ou une interface de programme d'applications (241) connectée à un ou plusieurs capteurs (235-237).

6. Procédé selon l'une quelconque des revendications précédentes, dans lequel la source de données d'entrée est des données entrées manuellement par un habitant.

7. Procédé selon l'une quelconque des revendications précédentes, dans lequel des paramètres d'utilisation de produit au sein du domicile sont calculés par des données entrées manuellement par un habitant se rapportant à la quantité de produit utilisée.

8. Procédé selon l'une quelconque des revendications précédentes, où en plus de l'au moins une source de données d'entrée, des données externes sont également collectées.

9. Procédé selon l'une quelconque des revendications précédentes, dans lequel ledit habitant associé audit événement de consommation identifié est différencié en fonction de caractéristiques physiques collectées par un capteur.
